# EUROPÄISCHE PATENTSCHRIFT

(11) **EP 2 158 460 B1**
(45) Veröffentlichungstag und Bekanntmachung des Hinweises auf die Patenterteilung: **04.04.2012**
(21) Anmeldenummer: 08759490.9
(22) Anmeldetag: 09.05.2008
(51) Int. Cl.: G01J 3/02, G01J 3/08, G01J 3/18, G01J 3/22, G01J 3/28, G01J 3/32

(54) **SPEKTROMETERANORDNUNG**
SPECTROMETER ARRANGEMENT
SYSTÈME DE SPECTROMÈTRE

(30) Priorität: 18.06.2007 DE 102007028505
(43) Veröffentlichungstag der Anmeldung: 03.03.2010
(73) Patentinhaber: Leibniz - Institut für Analytische Wissenschaften - ISAS - E.V., 44139 Dortmund (DE)
(72) Erfinder: BECKER-ROSS, Helmut, 12557 Berlin (DE); OKRUSS, Michael, 14482 Potsdam (DE); FLOREK, Stefan, 12526 Berlin (DE)
(74) Vertreter: Weisse, Renate
(86) Internationale Anmeldenummer: PCT/EP2008/055755
(87) Internationale Veröffentlichungsnummer: WO 2008/155169

(56) Entgegenhaltungen:
- DE-A1- 19 961 908
- DE-A1-102004 028 001
- US-A- 3 390 604
- US-A- 3 472 595
- BERNSTEIN R A ET AL: "MIKE: a double echelle spectrograph for the Magellan Telescopes at Las Campanas Observatory" PROC. SPIE, Bd. 4841, März 2003 (2003-03), Seiten 1694-1704, XP002491927

## Beschreibung

Die Erfindung betrifft eine Spektrometer-Anordnung mit einem Spektrometer zur Erzeugung eines Spektrums von Strahlung aus einer Strahlungsquelle auf einem Detektor nach dem Oberbegriff des Anspruchs 1.

Spektrometer dienen der spektralen Zerlegung von Strahlung. Ein Beispiel für eine Spektrometeranordnung, bei der eine abbildende, optische Anordnung in Littrow-Anordnung verwendet wird, ist in der Veröffentlichung "Technisches Handbuch für optische Messgeräte", VEB Carl Zeiss Jena, Jena, April 1963, Druckschriftennummer 32-038-1 im Kapitel "Spiegelmonochromator SPM2" gezeigt. Hinter einem Eintrittsspalt ist ein Umlenkprisma angeordnet. Das Umlenkprisma leitet die Strahlung auf einen Parabolspiegel. Dort wird die divergente Strahlung parallelisiert. Das parallele Strahlenbündel wird an dem Spiegel aus der Eintrittsspaltebene heraus auf eine Prismenanordnung reflektiert und dort dispergiert. Ein Spiegel reflektiert die dispergierte Strahlung in sich selbst zurück und erneut durch das Prisma. Von dort wird die Strahlung über den Parabolspiegel geleitet und fokussiert. Die Anordnung ist so eingestellt, dass die dispergierte Strahlung ein wenig versetzt auf den Parabolspiegel auftrifft. Sie wird somit an dem Umlenkprisma in Richtung Austrittsspalt umgelenkt.

Das Wellenlängenspektrum und seine Veränderung bildet insbesondere bei analytischen Aufgaben eine häufige Grundlage. Spektren mit hoher spektraler Auflösung werden mit Echelle-Spektrometern erreicht.

Bei Echelle-Spektrometern werden Gitter mit einem treppenartigen (Echelle (frz.) = Treppe) Querschnitt der Gitterfurchen verwendet. Durch die stufenartige Struktur mit einem entsprechenden Blaze-Winkel wird ein Beugungsmuster erzeugt, welches die gebeugte Intensität in hoher Ordnung, z.B. in fünfzigster bis einhundertster Ordnung konzentriert. Dadurch können hohe spektrale Auflösungen bei kompakter Anordnung erreicht werden. Die Ordnungen können sich - je nach einfallenden Wellenlängen - überlagern. Die Ordnungen werden daher nochmals quer zur Dispersionsebene dispergiert, um die verschiedenen auftretenden Ordnungen zu trennen. Man erhält so ein zweidimensionales Spektrum, das mit Flächendetektoren erfasst werden kann.

Ein solches Echelle-Spektrometer mit interner Ordnungstrennung unterscheidet sich von Echelle-Spektrometern mit externer Ordnungstrennung, bei welchen nur Strahlung aus einem kleinen Spektralbereich in das Spektrometer eintritt. Bei Spektrometern mit interner Ordnungstrennung wird das Spektrum in Form einer zweidimensionalen Struktur auf dem Detektor erzeugt. Diese Struktur besteht aus im wesentlichen parallel zueinander angeordneten, spektralen Abschnitten von der Größe eines freien Spektralbereichs. Die Verwendung eines Flächendetektors mit einer Vielzahl von Detektorelementen erlaubt die simultane Erfassung eines großen Wellenlängenbereichs mit hoher Auflösung.

Die Querdispersion wird gewöhnlich so groß gewählt, dass die Ordnungen überall vollständig getrennt sind. Um dies über den gesamten Spektralbereich zu gewährleisten, gibt es spektrale Bereiche, bei denen zwischen den einzelnen Ordnungen ein nicht genutzter Zwischenraum entsteht. So entstehen bei Verwendung eines Prismas zur Querdispersion im kurzwelligen Spektralbereich aufgrund des höheren Gradienten des Brechungsindex' größere Zwischenräume als im längerwelligen Spektralbereich.

Nachteilig bei den bekannten Anordnungen ist es, daß die Detektoren im allgemeinen sehr groß sein müssen, wenn größere Spektralbereiche mit hoher Auflösung und ausreichendem Lichtleitwert erfasst werden sollen. Weiterhin ergeben sich Probleme, wenn die Strahlungsquelle mit sehr unterschiedlichen spektralen Intensitäten emittiert. So wird der in der Spektroskopie wichtige Spektralbereich von 193 nm bis 852 nm zwar von einigen Strahlern vollständig abgedeckt, die Intensität ist jedoch im Bereich oberhalb 350 nm oftmals um mehrere Größenordnungen höher als im kurzwelligen Spektralbereich bei 200 nm. Üblicherweise haben Detektoren keinen ausreichenden Dynamikbereich, so daß die Spektralbereiche nur mit Einbußen bei der Empfindlichkeit simultan erfasst werden können oder getrennt voneinander mit unterschiedlichen Belichtungszeiten gemessen werden müssen.

Es ist aus der DD 292 078 eine Anordnung bekannt, bei welcher die Zwischenräume zwischen den Ordnungen genutzt werden. Das Spektrometer wird mit einer Anordnung zur Vordispersion der in das Spektrometer eintretenden Strahlung versehen. Die Strahlung wird an einem Prisma mit sehr kleinem Winkel vordispergiert. Weiterhin wird eine Eintrittsspalthöhe gewählt, die mit der maximalen Breite eines Zwischenraums zwischen zwei Ordnungen im kurzwelligen Spektralbereich korrespondiert. Durch geeignete Beleuchtung des Eintrittsspalts kann nun die kurzwellige Strahlung vollständig in das Spektrometer eintreten. Die Strahlung der längerwelligen Spektralbereiche trifft durch die Vordispersion nur teilweise auf den Eintrittsspalt. Dadurch wird in den Bereichen, wo die Ordnungstrennung nicht so groß ist, eine geringere Eintrittsspalthöhe wirksam. Auf diese Weise wird für den im allgemeinen intensitätsschwachen, kurzwelligen Spektralbereich der Lichtleitwert erhöht.

Durch diese Anordnung wird die Detektorfläche zwar vollständig ausgenutzt, die Detektorgröße bleibt jedoch gleich. Auch die Beleuchtungsstärke jedes einzelnen Detektorelements wird durch die Anordnung praktisch nicht verändert. Dafür treten insgesamt Verluste an den zusätzlichen optischen Komponenten auf.

Es ist weiterhin eine Anordnung bekannt, die eine bessere Ausnutzung der Detektoroberfläche durch gleichmäßigere Querdispersion über den gesamten Spektralbereich zum Ziel hat. Diese gleichmäßigere Querdispersion wird dadurch erreicht, daß die Querdispersion durch zwei gegenläufige Prismen unterschiedlichen Materials bewirkt wird. Die Dispersion bestimmt sich dann aus der Differenz der Dispersionen der beiden Materialien. Es müssen große Prismenwinkel verwendet werden, um eine ausreichend große Differenz zu erreichen. Es treten entsprechend hohe Transmissionsverluste bei gleichzeitig nur geringer resultierender Dispersion auf.

Es ist außerdem eine Anordnung bekannt, bei welcher eine Kombination aus Prisma und Gitter zur Erzeugung der Querdispersion verwendet werden. Das Prisma hat im kurzwelligen Spektralbereich eine höhere Dispersion und das Gitter im langewelligen Spektralbereich. Die Kombination erzeugt eine gleichmäßigere Querdispersion, als eine der Komponenten alleine. Nachteilig bei dieser Anordnung ist es jedoch, daß durch die verschiedenen Ordnungen des Querdispersionsgitters die Eindeutigkeit der Ordnungstrennung verloren geht. Auch hier ergeben sich Schwierigkeiten mit dem Dynamikbereich des Detektors, wenn über weite Bereiche simultan gemessen werden soll. Bei einem aus der DE 10 2004 28 001 und unter der Bezeichnung "ARYELLE" bekannten Doppel-Spektrometer wird zusätzlich zu einer ersten Spektrometeranordnung eine zweite Spektrometer-Anordnung verwendet. Beide Spektrometer-Anordnungen haben einen eigenen Eintrittsspalt, eine eigene Dispersionsanordnung und eine eigene abbildende Optik. Dies erlaubt die separate Optimierung der optischen Komponenten für unterschiedliche Wellenlängenbereiche. Die Spektrometer-Anordnungen arbeiten mit einem gemeinsamen Detektor, der in einer gemeinsamen Bildebene angeordnet ist. Je nach dem, welcher Eintrittsspalt beleuchtet wird, detektiert der Detektor Strahlung aus dem einen oder anderen Wellenlängenbereich. Alle Bauteile sind fest montiert. Die Auswahl des Wellenlängenbereichs erfolgt extern durch Auswahl des Eintrittsspalts. Hierfür kann zum Beispiel ein Chopper oder dergleichen verwendet werden. Die Anordnung ist aufgrund der Vielzahl optischer Bauteile teuer und aufwändig zu justieren.

US 3 472 595 (Shojiro) offenbart eine Spektrometeranordnung mit einem Spektrometer, welches zwei Echellegitter in Littrow-Anordnung aufweist. Der Strahlengang wird mittels eines einschiebbaren Planspiegels entweder auf das eine oder auf das andere Gitter geleitet.

Die Druckschrift "MIKE: A Double Echelle Spectrograph for the Magellan Telescopes at Las Campanas Observatory" von Rebecca A. Bernstein, Stephen A. Shectman, Steve Gunnels, Stefan Mochnacki und Alex Athey in Proc.Spie, Bd.4841, März 2003 (2003-03), S. 1694-1704 offenbart die Verwendung eines Doppel-Kanal-Systems, bei welchem unterschiedliche Wellenlängenbereiche über unterschiedliche Dispersionsanordnungen dispergiert werden.

DE 199 61 908 C2 (Becker-Ross, Florek, Okruss) offenbart ein Echelle-Spektrometer mit einem Echelle-Gitter in Littrow-Anordnung, das in einer ersten Stellung die dispergierte Strahlung direkt zurück auf einen Hohlspiegel reflektiert und in einer zweiten Stellung auf einen Planspiegel, welcher die Strahlung zum erneuten Durchgang über das Gitter reflektiert. Mit dem zweifachen Durchgang über das Gitter wird durch bloßes Hinzufügen eines einfachen Planspiegels eine höhere spektrale Auflösung erreicht.

US 3 390 604 (Hideki Makabe) offenbart eine Anordnung, bei welcher ein aus mehreren Gittern ausgewähltes Beugungsgitter in den Strahlengang hineingeschoben wird.

### Offenbarung der Erfindung

Es ist Aufgabe der Erfindung, eine Spektrometer-Anordnung der eingangs genannten Art einfacher und wirtschaftlicher zu gestalten.

Erfindungsgemäß wird die Aufgabe gelöst durch die kennzeichnenden Merkmale des Anspruchs 1. Im Gegensatz zur bekannten Anordnung ist nun nur ein Eintrittsspalt, gegebenenfalls auch nur ein Chopper, erforderlich. Die Beleuchtung des Eintrittsspalts ist entsprechend einfacher. Die Aufteilung der Strahlung auf zwei Wellenlängenbereiche erfolgt innerhalb des Spektrometers. Die gemeinsame Nutzung der abbildenden Optik in Littrow-Anordnung führt zu einer geringeren Anzahl optischer Bauteile. Die Anordnung wird somit kostengünstiger. Lediglich eine Komponente der abbildenden Optik wird beweglich ausgebildet, um den Strahlengang über die eine oder die andere Dispersionsanordnung zu führen.

Die abbildende optische Anordnung umfasst einen Hohlspiegel, der durch eine Rotationsbewegung von der ersten in die zweite Stellung beweglich ist. Durch geeignete Auswahl der Rotationsachse kann der Hohlspiegel je nach Wellenlängenbereich die eine oder die andere Dispersionsanordnung beleuchten. Die erste Dispersionsanordnung kann außerhalb einer Ebene angeordnet sein, die durch Eintrittspalt, Hohlspiegel und Detektor, bzw. deren mittige Punkte, definiert ist und die zweite Dispersionsanordnung auf der anderen Seite außerhalb dieser Ebene. Der Strahl tritt durch den Eintrittsspalt, läuft über einen Umlenkspiegel und wird am Hohlspiegel z.B. nach oben ausgelenkt. Nach der Dispersion läuft der Strahl bis auf einen kleinen seitlichen Versatz in sich zurück. Durch diesen Versatz läuft der Strahl über einen anderen Umlenkspiegel in Richtung des Austrittsspalts. Durch Drehung des Hohlspiegels kann die Auslenkung nach unten auf eine andere Dispersionsanordnung erfolgen, wenn ein anderer Wellenlängenbereich gemessen werden soll.

Erfindungsgemäß ist der Hohlspiegel ein Off-axis-Parabolspiegel. Alternativ zur Erfindung ist aber auch ein Toroidspiegel oder ein sphärischer Spiegel für diesen Zweck geeignet. Mit einem Off-axis-Parabolspiegel wird eine besonders gute Abbildungsqualität erreicht.

Die Off-axis liegende Rotationsachse verläuft durch den Brennpunkt des Hohlspiegels, wodurch der Betrag des Ablenkwinkels zwischen einfallendem und ausfallendem Strahl einer Wellenlänge in der ersten und zweiten Stellung gleich ist. Dadurch wird eine symmetrische Anordnung hoher Abbildungsqualität erreicht.

In einer besonders bevorzugten Ausgestaltung der Erfindung umfasst die erste und/oder zweite Dispersionsanordnung ein Echelle-Gitter und ein weiteres, quer zur Dispersionsrichtung des Echelle-Gitters wirkendes Dispersionselement. Mit einem Echelle-Gitter und einer Querdispersion wird ein hochaufgelöstes, zweidimensionales Spektrum erzeugt. Da das Spektrum nur über einen ausgewählten, also beschränkten Wellenlängenbereich detektiert wird, reicht ein kleinerer Flächendetektor für die Detektion aus.

Vorzugsweise ist ein Flächendetektor mit einer zweidimensionalen Anordnung einer Vielzahl von Detektorelementen in der Bildebene vorgesehen. Das ermöglicht die Simultanmessung in dem ausgewählten Wellenlängenbereich. Durch die Messung von Linienumgebungen können Ergebnisse normiert und gegenüber dem Untergrund korrigiert werden.

Vorzugsweise sind die optischen Eigenschaften der Elemente der Dispersionsanordnungen bezüglich des zugehörigen Wellenlängenbereichs optimiert. Solche Optimierung kann die Gitter-Strichzahl, den Blazewinkel, den brechenden Winkel des Prismas, das Prismenmaterial und die Beschichtung der optischen Komponenten betreffen. Zusätzlich kann der Dynamikbereich des Detektors an den jeweiligen Wellenlängenbereich angepasst werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische, schematische Darstellung eines Doppel-Spektrometers mit schwenkbarem Hohlspiegel.
- Fig.2: ist eine Draufsicht auf das Doppel-Spektrometer aus Fig.1.
- Fig.3: ist eine Seitenansicht des Doppel-Spektrometers aus Fig.1 und 2.
- Fig.4: illustriert die Intensitätsverteilung am Detektor bei Messung des längerwelligen Spektralbereichs
- Fig.5: illustriert die Intensitätsverteilung am Detektor bei Messung des kürzerwelligen Spektralbereichs

### Beschreibung des Ausführungsbeispiels

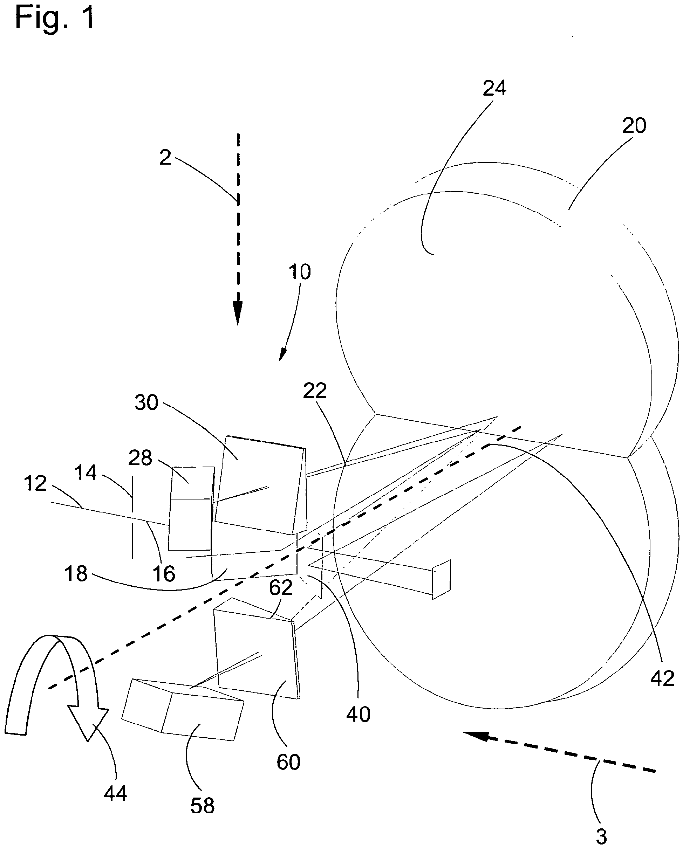

In Fig.1 sind die wesentlichen Komponenten einer allgemein mit 10 bezeichneten Spektrometer-Anordnung dargestellt. Zwingend notwendige, aber für die Erfindung unwichtige Bauteile, wie etwa eine Strahlungsquelle, das Gehäuse, Halterungen und Elektronik sind aus Gründen der besseren Übersicht nicht dargestellt.

Strahlung 12 aus einer nicht dargestellten Strahlungsquelle tritt durch einen Eintrittsspalt 14 in das Spektrometer ein. An einem Planspiegel 18 wird die Strahlung 16 in Richtung auf einen Off-Axis-Parabolspiegel 20 um einen Winkel von etwa 90° reflektiert. Der Parabolspiegel wirkt zunächst als Kollimatorspiegel. Die divergente Strahlung 22 wird durch die parabelförmige Krümmung der reflektierenden Spiegelfläche 24 des Spiegels 20 parallelisiert.

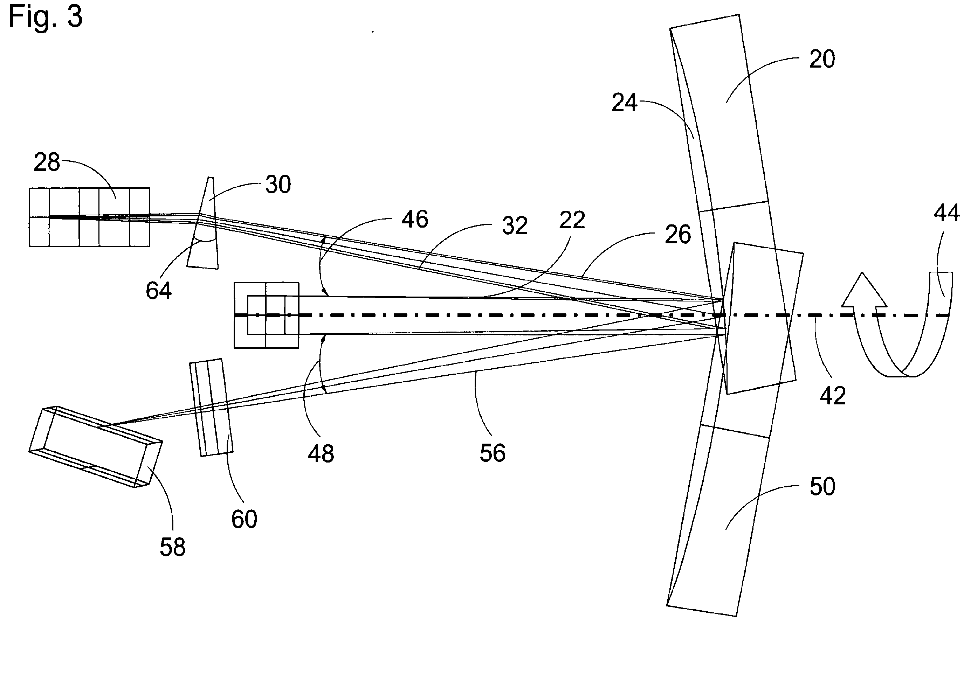

Der Off-Axis-Parabolspiegel ist derart angeordnet, dass die auftreffende Strahlung 22 etwas nach oben abgelenkt wird. Dies ist besonders gut in der Seitenansicht Fig.3 in Richtung des Pfeils 3 erkennbar. Die nach oben laufende Strahlung 26 wird an einem ersten Echellegitter 28 in einer Hauptdispersionsrichtung und an einem Quarzprisma 30 in einer dazu senkrechten Querdispersionsrichtung dispergiert. Das Echelle-Gitter 28 erzeugt ein hochaufgelöstes Spektrum mit einer Vielzahl von Ordnungen, die durch die Querdispersion am Prisma 30 "auseinandergezogen" werden. Das Gitter 28 ist so ausgerichtet, dass der dispergierte Strahl 32 entsprechend der Littrow-Anordnung im wesentlichen in sich selbst zurückläuft. Der Strahl passiert das Prisma 30 erneut und wird auf diese Weise in Querdispersionsrichtung zwei Mal dispergiert.

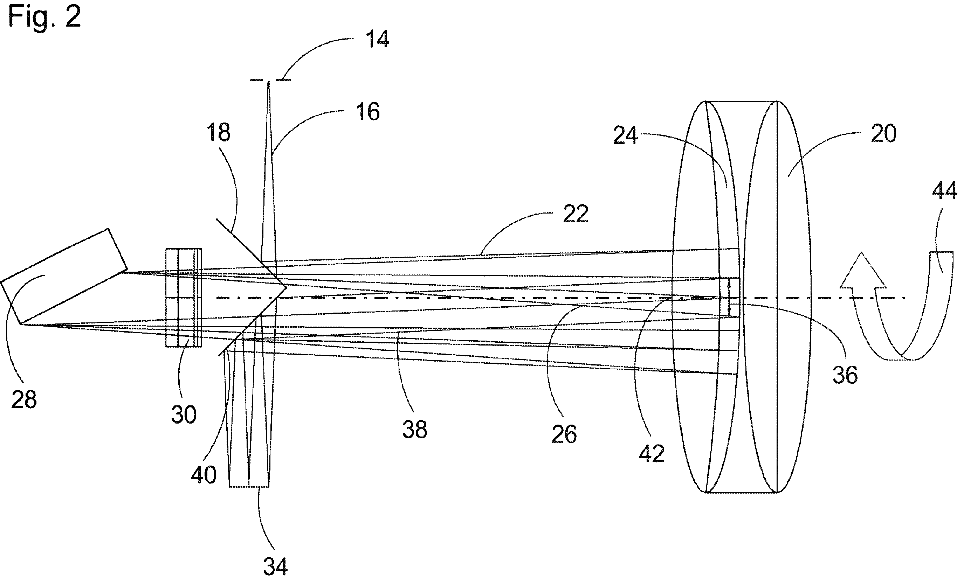

Der Off-Axis-Parabolspiegel 20 ist in Littrow-Anordnung angeordnet und dient für die rücklaufende Strahlung 32 als Kameraspiegel zur Fokussierung der dispergierten Strahlung in einer Austrittsebene 34. In Fig.2 ist erkennbar, dass die Strahlung dabei um eine Strecke 36 etwas versetzt auf dem Spiegel 20 auftritt. Am Spiegel 20 wird der dispergierte Strahl 32 in einer Bildebene am Detektor 34 fokussiert. Durch den Versatz läuft der fokussierte Strahl 38 auf einen weiteren Planspiegel 40. Der Planspiegel 40 reflektiert den Strahl 38 zum Detektor in der Bildebene 34. Der Planspiegel 40 ist in einem rechten Winkel zum Planspiegel 18 angeordnet. Auf diese Weise können Eintrittsspalt und Detektor auf einer Achse gegenüberliegend angeordnet werden. Dies ist in der Draufsicht Fig.2 in Richtung des Pfeils 2 gut erkennbar.

Die Dispersionsanordnung mit Echelle-Gitter 28 und Prisma 30 ist derart ausgelegt, dass ein ausgewählter Wellenlängenbereich, zum Beispiel der kurzwellige Wellenlängenbereich zwischen 350 nm und 190 nm auf den Detektor fällt. Die Dispersion eines Quarzprismas ist in diesem kurzwelligen Bereich vergleichsweise hoch. Es ist also nur ein kleiner Prismenwinkel zur Querdispersion erforderlich, der ausreicht um die Ordnungen im Wellenlängenbereich bei etwa 350nm auf dem Detektor sauber voneinander zu trennen. Die Strichzahl des Echelle-Gitters wird so gewählt, dass die Ordnung bei 350 nm gerade vollständig auf den Detektor passt. Niedrigere Ordnungen, die bei dieser Strichzahl über den Detektor hinaus ragen, brauchen nicht berücksichtigt werden. Das so entstehende Spektrum zwischen 190 nm und 350 nm deckt somit die gesamte Detektorfläche ab. Da die Intensität z.B. von kontinuierlichen Strahlungsquellen, wie Xe-Hochdrucklampen oder Deuteriumlampen, die bei Messungen in der Atomabsorptionsspektrometrie verwendet werden, gering ist, wird der Dynamikbereich des Detektors so eingestellt, dass auch geringe Intensitäten noch gemessen werden können.

Wenn nun im Wellenlängenbereich zwischen 350 nm und 852 nm gemessen werden soll, wird der Off-Axis-Parabolspiegel 20 um eine Achse 42 um 180° rotiert. Dies ist durch einen Pfeil 44 repräsentiert. Der rotierte Off-axis-Parabolspiegel nimmt nun eine zweite Stellung ein, die mit 50 bezeichnet ist. Dadurch wird der Strahl 22 nicht nach oben 26 sondern nach unten 52 abgelenkt.

Die Achse 42 verläuft durch den Brennpunkt des Parabolspiegels und die Mitte seines außerachsialen Bereiches, welcher für die Reflexion der Bündel benötigt wird. Damit ist die Achse 42 so ausgelegt, dass der Betrag der Ablenkung 46 des Strahls nach oben der gleiche ist, wie der Betrag der Ablenkung 48 des Strahls nach der Rotation nach unten.

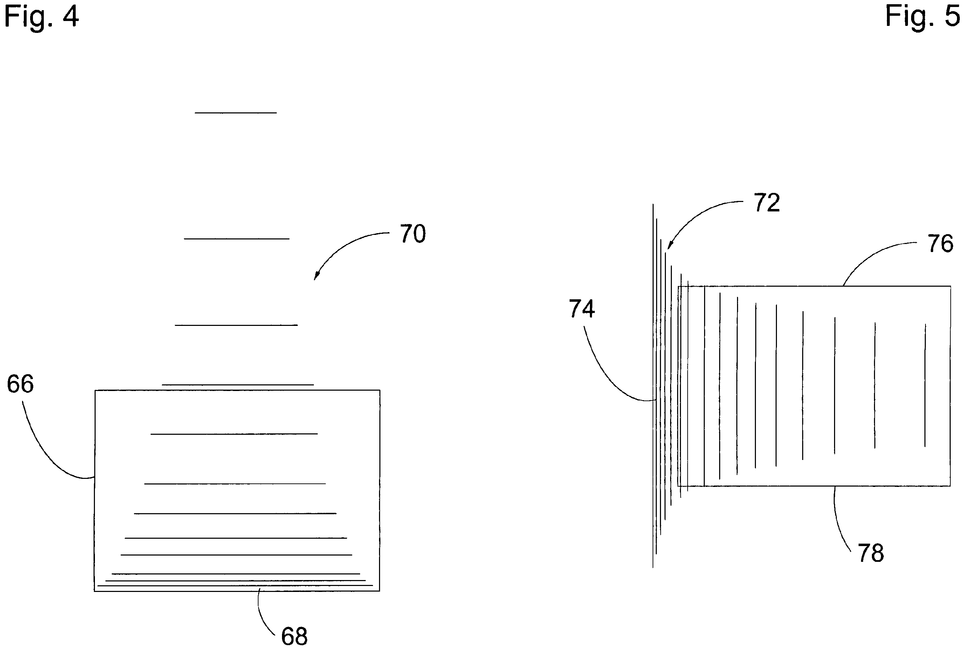

Hier ist nun eine weitere Dispersionsanordnung mit einem Echelle-Gitter 58 und einem Prisma 60 angeordnet. Der Prismenwinkel 62 des Prismas 60 ist größer als der Prismenwinkel 64 des Prismas 30, oder es wird ein anderes Prismenmaterial mit höherer Dispersion verwendet Dadurch wird Strahlung aus dem Wellenlängenbereich zwischen 350nm und 852nm stärker in Querdispersionsrichtung dispergiert, so dass auch für diesen Wellenlängenbereich die Detektorfläche vollständig ausgenutzt wird. Die Gitterstrichzahl des Gitters 58 ist geringer als die Gitterstrichzahl des Gitters 28. Dadurch wird erreicht, dass die niedrigeren Ordnungen im Wellenlängenbereich zwischen 350 nm und 852 nm vollständig auf den Detektor fallen. Die Detektorfläche wird also auch in dieser Richtung vollständig ausgenutzt. In der zweiten Dispersionsanordnung sind Gitter und Prisma so angeordnet, daß die Dispersionsrichtungen auf dem Detektor gegenüber denen bei der ersten Dispersionsanordnung um 90° verdreht sind. Dies ist in den Figuren 4 und 5 erkennbar. Die Variante erweitert bei nicht quadratischen Detektorflächen die Möglichkeiten bei der Anpassung der Spektrengeometrien an die Detektorfläche. Bei Messung in diesem Wellenlängenbereich wird der Detektor häufiger ausgelesen um die höhere Intensität zu berücksichtigen.

Die spektrale Intensitätsverteilung der beiden Wellenlängenbereiche auf dem Detektor ist in Fig.4 und 5 dargestellt. Figur 4 zeigt die Verteilung bei Messung des längerwelligen Spektralbereichs. Man erkennt, dass die Ordnungen 68 vollständig auf den Detektor 66 passen. Auch sind die Ordnungen vollständig voneinander getrennt. Der kurzwellige Bereich 70 wird nicht mit erfasst. Hier sind die Ordnungen durch die hohe Prismendispersion weit auseinander gezogen und bei der geringen Gitterstrichzahl vergleichsweise kurz. Demgegenüber wird in Fig.5 der langwellige Bereich 72 nicht erfasst. Die Ordnungen 74 erstrecken sich über die Detektorränder 76 und 78 hinaus. Außderdem sind die Ordnungen nicht ausreichend getrennt. Die Ordnungen des kurzwelligen Bereichs liegen aufgrund der geringeren Prismendispersion dichter beieinander. Die Detektorfläche wird dadurch besser ausgenutzt. Eine höhere Strichzahl am Echelle-Gitter führt zu längeren Ordnungen und einer besseren Auflösung.

Durch die geringeren Detektorabmessungen verlaufen die Randstrahlen achsnah mit kleinem Ablenkwinkel. Dadurch werden die Abbildungsfehler verringert.

Anhand des dargestellten Ausführungsbeispiels ist zu erkennen, dass mit einem für alle Wellenlängen gemeinsamen Eintrittsspalt, einer gemeinsamen, abbildenden Optik und einem gemeinsamen Detektor durch Drehung des Hohlspiegels zwei unterschiedliche Dispersionsanordnungen beleuchtet werden können. Durch die Anpassung der dispergierenden Elemente kann die teure Detektorfläche optimal genutzt werden. Auch ist der Detektor kleiner und kann entsprechend schneller ausgelesen werden. Es versteht sich, dass das Ausführungsbeispiel lediglich beispielhaft einen Wellenlängenbereich betrachtet und auch andere Wellenlängenbereiche ausgewählt werden können.

Die beschriebene Erfindung erlaubt eine Vielzahl von Variationen. So ist auch ein Wechsel zwischen einer zweidimensionalen Dispersionsanordnung mit Echelle-Gitter und einer eindimensionalen Dispersionsanordnung sinnvoll, wobei der Flächendetektor dann sowohl zur spektralen Auflösung als auch zur Ortsauflösung bei langem Eintrittsspalt benutzt werden kann.

## Patentansprüche

1. Spektrometer-Anordnung (10) mit einem Spektrometer in Littrow-Anordnung zur Erzeugung eines Spektrums von Strahlung aus einer Strahlungsquelle auf einem Detektor (34,66), enthaltend
(a) eine abbildende Optik (18, 20) zur Abbildung der in die Spektrometer-Anordnung eintretenden Strahlung (16) in eine Bildebene,
(b) eine erste Dispersionsanordnung (28,30) zur spektralen Zerlegung eines ersten Wellenlängenbereichs (72) der in die Spektrometer-Anordnung eintretenden Strahlung,
(c) eine zweite Dispersionsanordnung (58, 60) zur spektralen Zerlegung eines zweiten Wellenlängenbereichs (70) der in die Spektrometer-Anordnung eintretenden Strahlung,
(d) einen gemeinsamen in der Bildebene der abbildenden Optik angeordneten Detektor (34,66), wobei
(e) die abbildende Optik (18,20) ein zwischen zwei Stellungen bewegliches Element (20) umfasst, wobei die in die Spektrometer-Anordnung eintretende Strahlung in der ersten Stellung über die erste Dispersionsanordnung und in der zweiten Stellung über die zweite Dispersionsanordnung geleitet wird,
**dadurch gekennzeichnet, dass**
(f) das zwischen zwei Stellungen bewegliche Element von einem Off-Axis Parabolspiegel (20) gebildet ist, der durch eine Rotationsbewegung von der ersten in die zweite Stellung beweglich ist, und
(g) die Off-axis liegende Rotationsachse (42) durch den Brennpunkt des Off-Axis Parabolspiegels verläuft, wobei der Betrag (46, 48) des Ablenkwinkels zwischen einfallendem und ausfallendem Strahl einer Wellenlänge in der ersten und zweiten Stellung gleich ist.

2. Spektrometer-Anordnung nach Anspruch 1, **dadurch gekennzeichnet, dass** die erste Dispersionsanordnung außerhalb einer Ebene angeordnet ist, die durch Eintrittspalt, Hohlspiegel und Detektor, bzw. deren mittige Punkte, definiert ist und die zweite Dispersionsanordnung auf der anderen Seite außerhalb dieser Ebene.

3. Spektrometer-Anordnung nach einem der vorgehenden Anspruch, **dadurch gekennzeichnet, dass** die erste und/oder zweite Dispersionsanordnung ein Echelle-Gitter (28, 58) und ein weiteres, quer zur Dispersionsrichtung des Echelle-Gitters wirkendes Dispersionselement (30, 60) umfasst.

4. Spektrometer-Anordnung nach einem der vorgehenden Ansprüche, **dadurch gekennzeichnet, dass** ein Flächendetektor mit einer zweidimensionalen Anordnung einer Vielzahl von Detektorelementen in der Bildebene (34) vorgesehen ist.

5. Spektrometer-Anordnung nach einem der vorgehenden Ansprüche, **dadurch gekennzeichnet, dass** die optischen Eigenschaften der Elemente der Dispersionsanordnungen bezüglich des zugehörigen Wellenlängenbereichs optimiert sind.

6. Spektrometer-Anordnung nach Anspruch 1, **dadurch gekennzeichnet, dass** die erste Dispersionsanordnung eine zweidimensionale Dispersionsanordnung mit Echelle-Gitter ist und die zweite Dispersionsanordnung eine eindimensionale Dispersionsanordnung ist, so dass am Detektor neben der spektralen Auflösung auch die Ortsauflösung am Eintrittsspalt detektierbar ist.

7. Verfahren zur spektralen Zerlegung von Strahlung aus einer Strahlungsquelle in einem ausgewählten Wellenlängenbereich mit den Schritten:
(a) Beleuchten eines Eintrittspalts einer Spektrometer-Anordnung in Littrow-Anordnung;
(b) Abbilden der Strahlung auf eine Bildebene mittels einer abbildenden Optik;
(c) Dispergieren der Strahlung mit einer Dispersionsanordnung, wobei die Strahlung in Abhängigkeit vom Wellenlängenbereich mit einer ersten oder zweiten Dispersionanordnung dispergiert wird; und
(d) Detektieren der Strahlung des ausgewählten Wellenlängenbereichs in der Bildebene, wobei
(e) die abbildende Optik ein zwischen zwei Stellungen bewegliches Element umfasst, das in Abhängigkeit vom ausgewählten Wellenlängenbereich derart eingestellt wird, dass die in die Spektrometer-Anordnung eintretende Strahlung in der ersten Stellung über die erste Dispersionsanordnung und in der zweiten Stellung über die zweite Dispersionsanordnung geleitet wird,
**dadurch gekennzeichnet, dass**
(f) das zwischen zwei Stellungen bewegliche Element ein Off-Axis Parabolspiegel ist, der durch eine Rotationsbewegung von der ersten in die zweite Stellung beweglich ist, und
(g) die Off-axis liegende Rotationsachse (42) durch den Brennpunkt des Off-Axis Parabolspiegels verläuft, wobei der Betrag (46, 48) des Ablenkwinkels zwischen einfallendem und ausfallendem Strahl einer Wellenlänge in der ersten und zweiten Stellung gleich ist.

## Claims

1. Spectrometer assembly (10) with a spectrometer in Littrow arrangement for generating a spectrum of light emitted by a light source on a detector (34, 66), comprising:
(a) an optical assembly (18,20) for imaging light (16) entering the spectrometer assembly on an image plane,
(b) a first dispersing assembly (28, 30) for spectral dispersion of a first wavelength range (72) of the light entering the spectrometer assembly,
(c) a second dispersing assembly (58, 60) for spectral dispersion of a second wavelength range (70) of the light entering the spectrometer assembly, and
(d) a common detector (34, 66) in the image plane of the imaging optical assembly, wherein
(e) the imaging optical assembly (18, 20) comprises an element (20) adapted to be moved between two positions (20, 50), wherein the light entering the spectrometer assembly is guided through the first dispersing assembly in the first position and through the second dispersing assembly in the second position,
**characterized in that**
(f) the element adapted to be moved between two positions is an off-axis paraboloid mirror (20) which is moved from the first to the second position by rotation, and
(g) the off-axis rotational axis (42) extends through the focal point of the off-axis paraboloid mirror, where the degree (46, 48) of the deflecting angle between the incident and the reflected beam at one wavelength is the same in the first and the second position.

2. Spectrometer assembly according to claim 1, **characterized in that** the first dispersing assembly is arranged outside of a plane defined by the center points of entrance slit, concave mirror and detector and the second dispersing assembly is arranged on the other side outside of this plane.

3. Spectrometer assembly according to any of the preceding claims, **characterized in that** the first and/or second dispersing assembly comprises an Echelle grating (28, 58) and a further dispersion element (30, 60) dispersing in a direction lateral to the dispersion direction of the Echelle grating.

4. Spectrometer assembly according to any of the preceding claims, **characterized in that** a detector array with a two-dimensional assembly of a plurality of detector elements is arranged in the imaging plane (34).

5. Spectrometer assembly according to any of the preceding claims, **characterized in that** the optical properties of the elements of the dispersing assemblies are optimized with respect to the corresponding wavelength range.

6. Spectrometer assembly according to claim 1, **characterized in that** the first dispersing assembly is a two-dimensional dispersing assembly with an Echelle grating and the second dispersing assembly is a one-dimensional dispersing assembly so that in addition to the spectral resolution the spacial resolution can be detected at the entrance slit.

7. Method for spectrally dispersing light from a light source in a selected wavelength range with the steps of:
(a) illuminating an entrance slit of a spectrometer assembly in Littrow arrangement;
(b) imaging the light on an imaging plane by means of an imaging optical assembly;
(c) dispersing the light with a dispersing assembly, wherein the light is dispersed with a first or a second dispersing assembly depending on the wavelength range; and
(d) detecting the light from a selected wavelength range in the imaging plane,
wherein
(e) the imaging optical assembly comprises an element adapted to be moved between two positions depending on a selected wavelength range which is adjusted in such a way that the light entering the spectrometer assembly is passed through the first dispersing assembly in the first position of the element and through the second dispersing assembly in the second position of the element,
**characterized in that**
(f) the element adapted to be moved between two positions is an off-axis paraboloid mirror (20) which is moved from the first to the second position by rotation, and
(g) the off-axis rotational axis (42) extends through the focal point of the off-axis paraboloid mirror, where the degree (46, 48) of the deflecting angle between the incident and the reflected beam at one wavelength is the same in the first and the second position.

## Revendications

1. Disposition de spectromètre (10) munie d'un spectromètre en montage de Littrow destiné à produire un spectre de rayonnement sur un détecteur (34, 36) à partir d'une source de rayonnement, comprenant
(a) un système optique de reproduction (18, 20) destiné à reproduire dans un plan d'image le rayonnement (16) entrant dans la disposition de spectromètre,
(b) une première disposition de dispersion (28, 30) pour la décomposition spectrale d'une première plage de longueur d'ondes (72) du rayonnement entrant dans la disposition de spectromètre,
(c) une seconde disposition de dispersion (58, 60) pour la décomposition spectrale d'une seconde plage de longueur d'ondes (70) du rayonnement entrant dans la disposition de spectromètre,
(d) un détecteur commun (34, 66) disposé dans le plan d'image du système optique de reproduction,
(e) le système optique de reproduction (18, 20) comportant un élément (20) pouvant se déplacer entre deux positions, le rayonnement entrant dans la disposition de spectromètre étant guidé dans la première position par l'intermédiaire de la première disposition de dispersion et, dans la seconde position, par l'intermédiaire de la seconde disposition de dispersion,
**caractérisée en ce que**
(f) l'élément pouvant se déplacer entre deux positions est formé par un miroir parabolique hors d'axe (20) pouvant se déplacer par rotation de la première à la seconde position, et
(g) l'axe de rotation hors d'axe (42) traverse le foyer du miroir parabolique hors d'axe, la valeur (46, 48) de l'angle de déviation entre le rayon entrant et sortant d'une longueur d'onde étant la même en première et en seconde position.

2. Disposition de spectromètre selon la revendication 1, **caractérisée en ce que** la première disposition de dispersion est disposée en dehors d'un plan défini par la fente d'entrée, le miroir concave et le détecteur, voire de leur centre, et que la seconde disposition de dispersion se trouve de l'autre côté en dehors de ce plan.

3. Disposition de spectromètre selon l'une quelconque des revendications précédentes, **caractérisée en ce que** la première et/ou seconde disposition de dispersion comprend un réseau échelle (28, 58) et un autre élément de dispersion (30, 60) agissant diagonalement par rapport au sens de dispersion du réseau échelle.

4. Disposition de spectromètre selon l'une quelconque des revendications précédentes, **caractérisée en ce qu'**il est prévu un détecteur de surface muni d'une disposition bidimensionnelle de plusieurs éléments détecteurs dans le plan d'image (34).

5. Disposition de spectromètre selon l'une quelconque des revendications précédentes, **caractérisée en ce que** les propriétés optiques des éléments des dispositions de dispersion sont optimisées par rapport à la plage de longueur d'ondes associée.

6. Disposition de spectromètre selon la revendication 1, **caractérisée en ce que** la première disposition de dispersion est une disposition de dispersion bidimensionnelle munie d'un réseau échelle et la seconde disposition de dispersion est une disposition de dispersion unidimensionnelle de sorte qu'outre la résolution spectrale, la résolution locale située au niveau de la fente d'entrée peut être aussi détectée au niveau du détecteur.

7. Procédé pour la décomposition spectrale d'un rayonnement à partir d'une source de rayonnement dans une plage de longueur d'ondes choisie, comprenant les étapes de :
(a) éclairement de la fente d'entrée d'une disposition de spectromètre en montage de Littrow,
(b) reproduction du rayonnement sur un plan d'image au moyen d'un système optique de reproduction,
(c) dispersion du rayonnement à l'aide d'une disposition de dispersion, le rayonnement étant dispersé en fonction de la plage de longueur d'ondes à l'aide d'une première ou d'une seconde disposition de dispersion ; et
(d) détection du rayonnement de la plage de longueur d'ondes choisie dans le plan d'image,
(e) le système optique de reproduction comprenant un élément pouvant se déplacer entre deux positions et réglé en fonction de la plage de longueur d'ondes choisie de sorte que le rayonnement entrant dans la disposition de spectromètre est guidé dans la première position par l'intermédiaire de la première disposition de dispersion et, dans la seconde position, par l'intermédiaire de la seconde disposition de dispersion,
**caractérisé en ce que**
(f) l'élément pouvant se déplacer entre deux positions est un miroir parabolique hors d'axe qui peut se déplacer par rotation de la première à la seconde position, et
(g) l'axe de rotation hors d'axe (42) traverse le foyer du miroir parabolique hors d'axe, la valeur (46, 48) de l'angle de déviation entre le rayon entrant et sortant d'une longueur d'onde étant la même en première et en seconde position.
